# EUROPEAN PATENT SPECIFICATION

(11) **EP 4 522 540 B1**
(45) Date of publication and mention of the grant of the patent: **10.12.2025**
(21) Application number: 24751419.3
(22) Date of filing: 29.07.2024
(51) Int. Cl.: B65G 65/00

(54) **AUTONOMOUS MOBILE ROBOT WITH A CONVEYOR TRACK**
AUTONOMER MOBILER ROBOTER MIT FÖRDERBAHN
ROBOT MOBILE AUTONOME AVEC VOIE DE CONVOYAGE

(30) Priority: 03.08.2023 EP 23189596
(43) Date of publication of application: 19.03.2025
(73) Proprietor: Interroll Holding AG, 6592 Sant'Antonino (CH)
(72) Inventor: MATHEISEN, Christopher, 41836 Hückelhoven (DE); RIPPERDA, Christian, 41836 Hückelhoven (DE); JOHNSEN, Kristoffer Borris, 41836 Hückelhoven (DE); ZINN, Jürgen, 41836 Hückelhoven (DE); ABDELRAHMAN, Wagdi, 41836 Hückelhoven (DE); JENSEN, Jan Støvring, 41836 Hückelhoven (DE)
(74) Representative: Kohlhof, Stephan
(86) International application number: PCT/EP2024/071430
(87) International publication number: WO 2025/026967

(56) References cited:
- JP-A- 2021 181 362
- US-A1- 2022 258 327
- US-B1- 11 407 590

## Description

The invention refers to a method of manufacturing an autonomous mobile robot.

Basically an autonomous mobile robot is described under https://en.wikipedia.org/wiki/Autonomous_robot.

JP 2021 181362 A discloses an autonomous mobile robot comprising a base having a moving mechanism and a conveyor portion. The conveyor portion is attached to the base by means of an intermediate frame. This document is considered to disclose the preamble of claim 1 by the examining division.

In the foreign area of front loaders it is known from US 7,891,479 B2 to attach a supplement conveyor to the front loader by means of an adapter.

US 2022/258327 A1 discloses an autonomous mobile robot (AMR) with a single modular platform to mount plurality of material handling units.

US 11/407,590 B1 discloses another AMR having a conveying module on top, which can be rotated relative to the travel module.

The two modules, conveying module and travel module, arise from different fields of technology. The travel module arises from the field of autonomous and driverless vehicles, whereas the conveying module arises from the technology of logistics and conveyor technology. Consequently the travel module and the conveying module are usually provided by different manufacturers. Up to now a conveying track is individually designed for the intended use with a certain travel module.

It is the object of the present invention to simplify the process of providing the autonomous mobile robots to the users which are best adapted for the intended usage. The invention comprises a method according the main claim; embodiments are subject of the subclaims and the description.

There is a plurality of different travel modules available on the market each of which is specialized for certain tasks and fields of operation. Users of the autonomous mobile robot now have an easy opportunity to select the most suitable travel module and they do not need to care on the question, how to attach the selected travel module with a suitable conveyor track. Here the fixing adapter provides easy adaptability for a variety of travel modules to a conveyor module.

The invention provides an easy usage of modules which are available on the market without the need for a standardization. Instead the standardization, simple adapters are provided for the most common travel modules.

According to the autonomous mobile robot manufactured within the inventive method comprising a conveying module having a conveying track, the conveying track is adapted to convey an object between different positions along said first conveying track and/or to transfer said object from and/or to said autonomous mobile robot to/from an external location. The autonomous mobile robot comprising a travel module adapted to change its position within an area of operation, in particular in a non-mechanically track-bound manner. The autonomous robot comprises a fixing adapter, wherein the adapter is fixed to the travel module and wherein the conveyor module is fixed to the fixing adapter. The autonomous mobile robot comprises a fixing adapter, wherein the adapter is fixed to the travel module and wherein the conveyor module is fixed to the fixing adapter. The adapter is consequently a device for indirectly fixing the conveyor module to the travel module.

In an embodiment the travel module has a travel module fixing interface, and the conveyor module has a conveyor module fixing interface, wherein the conveyor module fixing interface does not match with the travel module fixing interface. This means in particular that the conveyor module cannot be fixed directly with the travel module.

In an embodiment the adapter comprising an adapter frame connecting the first adapter fixing interface to the second adapter fixing interface. The adapter frame ensure a fixed spatial relation between the first and second adapter fixing interfaces.

With the term "match" is meant, that modules or interfaces can be fixed to each other directly without further effort. Matching / direct fixing still may require an use of conventional fixing means like nuts, screws or bolts.

Ther term autonomous means that the robot is a unmanned device, which is able to perform the traveling action without requiring detailed driving instructions from outside of the robot. In main the robot may be provided with an order to one travel from location to another location; based on this order the robot provides all control commands autonomously.

An example embodiment of the invention is described with respect to the figures; herein show
- fig. 1: an exemplary conveying arrangement in top view having one or more autonomous mobile robots and a plurality of stationary conveyors;
- fig. 2: an autonomous mobile robot and a stationary conveyor of the conveying arrangement according to figure 1 in side view, wherein the conveying track is a) a belt conveying track, b) a roller conveying track;
- fig. 3: an autonomous mobile robot manufactured in the inventive way for use in an arrangement according to figure 1 in exploded view;
- fig. 4: additional travel modules and fixing adapters matching thereto to be used in the autonomous mobile robot according to figure 3 in exploded view;
- fig. 5: additional conveying modules matching to all adapters shown in figures 3 and 4.

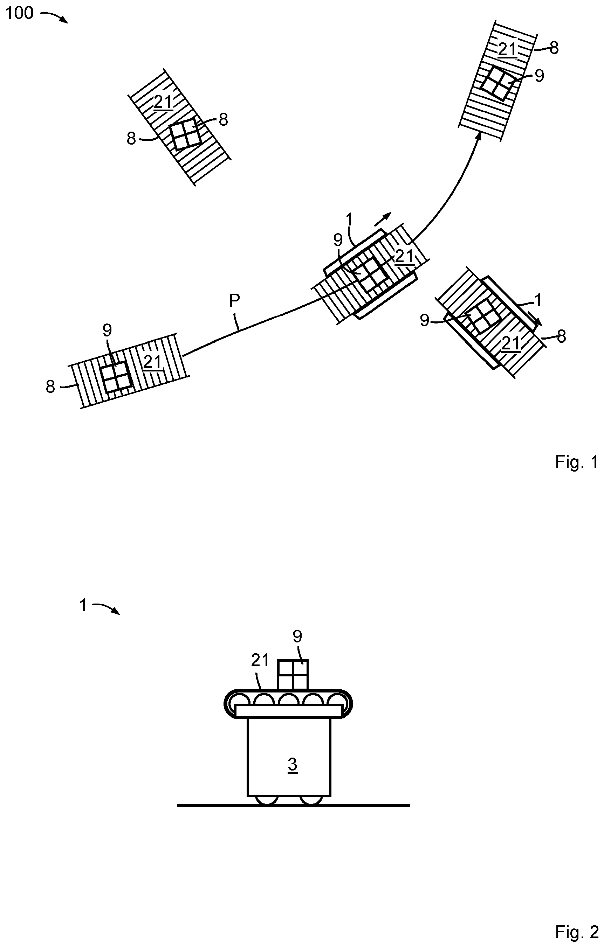

Figure 1 shows a conventional conveying arrangement 100 in top view. Figure 2 shows components of the conveying arrangement 100 in side view.

The conveying arrangement 100 has a number of stationary conveyors 8.

Stationary means that during intended use the location of the stationary conveyors 8 is fixed. But it is possible that during a modification of the conveying arrangement 100 the location of the stationary conveyors 8 may be changed from time to time, where such modification usually happens outside of the intended usage.

The stationary conveyor 8 has a conveying track 21 and a stationary support frame on which the conveying track 21 is mounted.

The conveying arrangement 100 has at least one, in particular a plurality of, autonomous mobile robot 1. The autonomous mobile robot 1 is adapted to drive within the conveying arrangement 100, which is herein called the driving operation.

With the conveying arrangement 100 an object 9 can be transported between any of the stationary conveyors 8 by means of the autonomous mobile robot 1 along a conveying path P. The conveying path P doesn't need to be a predefined conveying path; here the autonomous mobile robot 1 may drive autonomously along any in particular a shortest conveying path P, where the conveying path P may be defined individually for each individual driving operation.

In an embodiment the conveyor track 21 is a belt conveyor track. The belt conveyor track comprises a belt which is arranged around rollers. In an alternative embodiment the conveyor track 21 is a roller conveyor track having a plurality of rollers arranged one behind the other and forming a conveying surface. Any kind of conveyor track can be used (see explanations in European patent application EP22157909.7, description related to figures 2a, 2b)

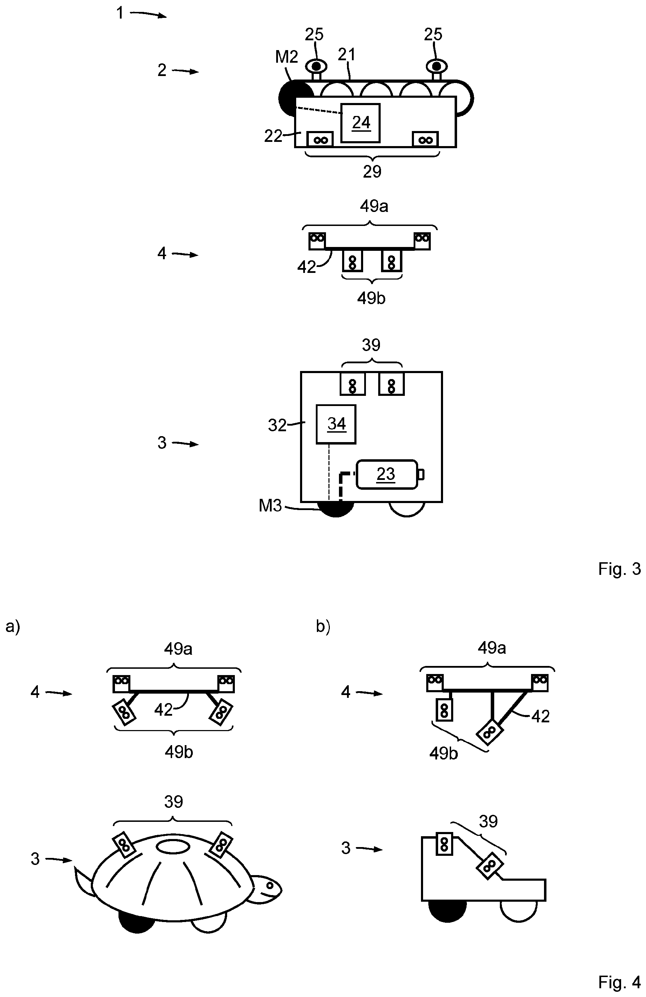

Figure 3 shows an autonomous mobile robot 1 manufactured by the inventive method split in its main components, the main components are: a travel module 3, a conveyor module 2, a fixing adapter 4.

The travel module 3 is adapted to enable, that the autonomous mobile robot 1 can change its position within the conveying arrangement 100. The travel module 3 is in particular an autonomous guided vehicle (AMR), which is adapted to control its movement autonomously. The travel module 3 comprises a travel drive M3, which is adapted to provide the travel module 3 with mechanical power to enable a change of its position. The travel module 3 comprises a travel module control 34, at least controlling operation of the travel drive M3. The components of the travel module 3 are attached at or in a travel module housing 32.

The travel drive M3 has in particular at least one motor driven wheel and a steering mechanism, where any solution provided in the prior art can be used. The travel module 3 comprises an energy storage 13, in particular a battery for rechargeable loading with electric power, which at least provides electric power to the travel drive M3.

The conveyor module 2 is mounted to the travel module 3, in particular on top of the of the travel module 3. The conveyor module 2 comprises the conveyor technology which enables transfer of said object 9 to and from the autonomous mobile robot 1 from / to another conveyor at a destination and in particular movement of said object 9 within the autonomous mobile robot 1. The conveyor module 2 comprises said conveyor track 21 and a conveyor module control 24, controlling operation of said conveyor track 21.

The conveyor track 21 in particular comprises a conveyor belt and/or conveyor rollers, etc. depending on the kind of conveyor track and the conveying task to be performed. The conveyor module 2 comprises also a support frame 22 for carrying the components of the conveyor track 21 and the conveyor module control 24. As an optional feature the conveyor module 2 has a presence sensor 25 for detecting the presence of an object 9 within the conveyor track 21.

The conveyor module 2 also comprises a conveyor drive M2, which is in particular an electric motor. The conveyor drive M2 provides mechanical drive power enabling the conveyor track 21 to move the object 9 relative to / within the autonomous mobile robot 1.

The conveyor module 2 has a conveyor module fixing interface 29 for fixing the conveyor module to a travel module fixing interface 39 of the travel module 3. The fixing interface 29 of the conveyor module

The conveyor module 2 has a fixing interface 29 for fixing the conveyor module 2 to the travel module 3. As apparent from figure 3 the fixing interfaces 29, 39 of said modules 2, 3 do not match to each other.

According to the invention a fixing adapter 4 is provided between the conveyor module 2 and the travel module 3. The fixing adapter 4 has a first adapter fixing interface 49a, which fits to the conveyor module fixing interface 29. The fixing adapter 4 has a second adapter fixing interface 49b, which fits to the travel module fixing interface 39. An adapter frame 42 connects the first and second adapter fixing interfaces 49a, 49b to each other. By attaching the first adapter fixing interface 49a to the conveyor module fixing interface 29 and attaching the second adapter fixing interface 49b to the travel module fixing interface 39, the conveyor module 2 is fixed to the travel module 3.

Figure 4a and 4b show examples of types of travel modules 3 different to each other and to the type of travel module 3 of figure 3. The travel modules 3 of figure 3 and figure 4 comprise different travel module fixing interfaces 39. To attach the conveyor module 2 of figure 3 to the travel modules 3 shown in figure 4, an individual type of adapter 4 is provided. Each individual type of adapter 4 comprises a specific second adapter fixing interface 49b, adapted to the respective type of travel module 3, so that the second adapter fixing interface 49b matches with the travel module fixing interface 39.

Each of the different types of adapters shown in figures 3 and 4 comprise a first adapter fixing interface 39a which matches with the conveyor module fixing interface 29 of the conveyor module 2 of figure 3.

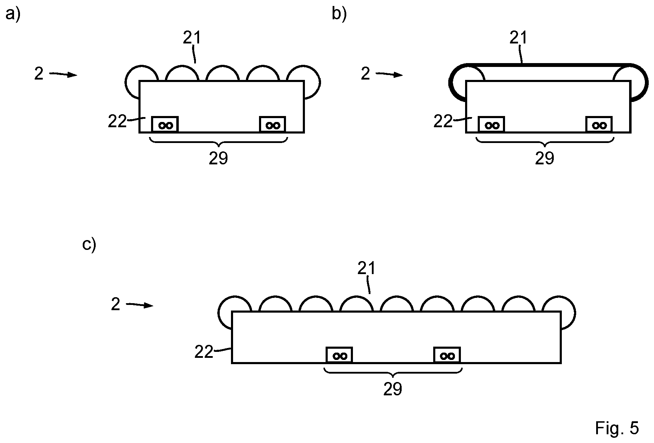

Figure 5 shows a plurality of different types of conveyor modules 2. All types of conveyor modules 2 are provided with in main the same conveyor module fixing interface 29. That means that the conveyor module fixing interfaces 29 are designed so as to match all with the first adapter fixing interfaces 49a of the different types of adapters shown in figures 3 and 4.

### List of reference signs

- 100: conveying arrangement
- 1: autonomous mobile robot
- 2: conveyor module
- 3: travel module
- 4: fixing adapter
- 8: stationary conveyor
- 9: object to be conveyed
- P: conveying path

- 13: energy storage

- M2: conveyor drive
- 21: conveyor track
- 22: support frame
- 24: conveyor module control
- 25: presence sensor
- 29: conveyor module fixing interface

- M3: travel drive
- 32: travel module housing
- 34: travel module control
- 39: travel module fixing interface

- 42: adapter frame
- 49a, 49b: first, second adapter fixing interface

## Claims

1. Method of manufacturing an autonomous mobile robot (1),
the autonomous mobile robot (1), comprising
- a conveyor module (2) having a conveyor track (21), the conveyor track (21 )is adapted to convey an object (9) between different positions along said conveyor track (21) and/or to transfer said object (9) from and/or to said autonomous mobile robot (1),
- a travel module (3) adapted to change its position within an area of operation, in particular in a non-mechanically track-bound manner,
wherein the mobile autonomous robot (1) comprises a fixing adapter (4),
wherein the fixing adapter (4) is fixed to the travel module (3) and
wherein the conveyor module (2) is fixed to the fixing adapter (4),
the method comprises the following steps:
providing said conveyor module (2);
providing said travel module (3);
**characterized in that** the travel module (3) is selected out of a plurality of different types of travel modules (3) comprising at least a first type travel module (3, figure 4a) and a second type travel module (3, figure 4a);
the method comprising the additional step of selecting a fixing adapter (4) out of a plurality of different types of fixing adapters (4) based on the type of the selected travel module (3), wherein the adapter (4) is matching to the selected travel module (3),
wherein each fixing adapter (4) of the plurality of different types of fixing adapters (4) comprises
- a first adapter fixing interface (49a) matching with a conveyor module fixing interface (29), and
- a second adapter fixing interface (49b) matching with a travel module fixing interface (39);
wherein the plurality of different fixing adapters (4) comprise
- a first type fixing adapter (4, figure 4a) having a second adapter fixing interface (49b) adapted to match with a travel module fixing interface (39) of the first type travel module (3, figure 4a),
- a second type fixing adapter (4, figure 4b) having a second adapter fixing interface (49b) adapted to match with a travel module fixing interface (39) of the second type travel module (3, figure 4b);
wherein the second adapter fixing interface (49b) of the first type fixing adapter (4, figure 4a) does not match with the travel module fixing interface (39) of the second type travel module (3, figure 4b), and/or
wherein the second adapter fixing interface (49b) of the second type fixing adapter (4, figure 4b) does not match with the travel module fixing interface (39) of the first type travel module (3, figure 4a).

2. Method according to the preceding claim,
**characterized in**
**that** each travel module (3) has a travel module fixing interface (39), and
**that** the conveyor module (2) has a conveyor module fixing interface (29),
wherein the conveyor module fixing interface (29) does not match with the travel module fixing interface (39).

3. Method according to the any of the preceding claims,
**characterized in**
**that** each adapter (4) comprising an adapter frame (42) connecting the first adapter fixing interface (49a) to the second adapter fixing interface (49b).

4. Method according to the preceding claim,
**characterized in**
**that** the adapter frame (42) is adapted to maintain the first adapter fixing interface (49a) and the second adapter fixing interface (49b) in defined spatial orientation to each other.

5. Method according to any of the preceding claims,
wherein the first type fixing adapter (4, figure 4a) has a first adapter fixing interface (49a);
wherein the second type fixing adapter (4, figure 4b) has a first adapter fixing interface (49a);
the first adapter fixing interface (49a) of the first type and the second type of fixing adapters (4, figure 4a/b) being adapted to match both with the plurality of types of conveyor modules (3, figure 5a-c).

## Patentansprüche

1. Verfahren zur Herstellung eines autonomen mobilen Roboters (1),
wobei der autonome mobile Roboter (1) umfasst
- ein Fördermodul (2), das eine Förderbahn (21) aufweist, wobei die Förderbahn (21) dazu eingerichtet ist, ein Objekt (9) zwischen verschiedenen Positionen entlang der Förderbahn (21) zu fördern und/oder das Objekt (9) von und/oder zu dem autonomen mobilen Roboter (1) zu überführen,
- ein Fahrmodul (3), das dazu eingerichtet ist, seine Position innerhalb eines Betriebsbereichs zu ändern, insbesondere auf eine nicht-mechanische bahngebundene Art und Weise,
wobei
der mobile autonome Roboter (1) einen Befestigungsadapter (4) umfasst,
wobei der Befestigungsadapter (4) an dem Fahrmodul (3) befestigt ist und
wobei das Fördermodul (2) an dem Befestigungsadapter (4) befestigt ist,
wobei das Verfahren die folgenden Schritte umfasst:
Bereitstellen des Fördermoduls (2);
Bereitstellen des Fahrmoduls (3);
**dadurch gekennzeichnet, dass**
das Fahrmodul (3) aus mehreren verschiedenen Typen von Fahrmodulen (3) ausgewählt ist, die wenigstens ein Fahrmodul eines ersten Typs (3, Figur 4a) und ein Fahrmodul eines zweiten Typs (3, Figur 4a) umfassen,
wobei das Verfahren den zusätzlichen Schritt umfasst:
Auswählen eines Befestigungsadapters (4) aus mehreren verschiedenen Typen von Befestigungsadaptern (4) basierend auf dem Typ des ausgewählten Fahrmoduls (3), wobei der Adapter (4) zu dem ausgewählten Fahrmodul (3) passt,
wobei jeder Befestigungsadapter (4) der mehreren verschiedenen Typen von Befestigungsadaptern (4) umfasst:
- eine erste Adapter-Befestigungsschnittstelle (49a), die zu einer Fördermodul-Befestigungsschnittstelle (29) passt, und
- eine zweite Adapter-Befestigungsschnittstelle (49b), die zu einer Fahrmodul-Befestigungsschnittstelle (39) passt;
wobei die mehreren verschiedenen Befestigungsadapter (4) umfassen:
- einen Befestigungsadapter eines ersten Typs (4, Figur 4a), der eine zweite Adapter-Befestigungsschnittstelle (49b) aufweist, die dazu eingerichtet ist, zu einer Fahrmodul-Befestigungsschnittstelle (39) des Fahrmoduls des ersten Typs (3, Figur 4a) zu passen,
- einen Befestigungsadapter eines zweiten Typs (4, Figur 4b), der eine zweite Adapter-Befestigungsschnittstelle (49b) aufweist, die dazu eingerichtet ist, zu einer Fahrmodul-Befestigungsschnittstelle (39) des Fahrmoduls des zweiten Typs (3, Figur 4b) zu passen;
wobei die zweite Adapter-Befestigungsschnittstelle (49b) des Befestigungsadapters des ersten Typs (4, Figur 4a) nicht zu der Fahrmodul-Befestigungsschnittstelle (39) des Fahrmoduls des zweiten Typs (3, Figur 4b) passt, und/oder wobei die zweite Adapter-Befestigungsschnittstelle (49b) des Befestigungsadapters des zweiten Typs (4, Figur 4b) nicht zu der Fahrmodul-Befestigungsschnittstelle (39) des Fahrmoduls des ersten Typs (3, Figur 4a) passt.

2. Verfahren nach dem vorhergehenden Anspruch,
**dadurch gekennzeichnet,**
**dass** jedes Fahrmodul (3) eine Fahrmodul-Befestigungsschnittstelle (39) aufweist und
**dass** das Fördermodul (2) eine Fördermodul-Befestigungsschnittstelle (29) aufweist,
wobei die Fördermodul-Befestigungsschnittstelle (29) nicht zu der Fahrmodul-Befestigungsschnittstelle (39) passt.

3. Verfahren nach einem der vorhergehenden Ansprüche,
**dadurch gekennzeichnet,**
**dass** jeder Adapter (4) einen Adapterrahmen (42) umfasst, der die erste Adapter-Befestigungsschnittstelle (49a) mit der zweiten Adapter-Befestigungsschnittstelle (49b) verbindet.

4. Verfahren nach dem vorhergehenden Anspruch,
**dadurch gekennzeichnet,**
**dass** der Adapterrahmen (42) dazu eingerichtet ist, die erste Adapter-Befestigungsschnittstelle (49a) und die zweite Adapter-Befestigungsschnittstelle (49b) in einer definierten räumlichen Ausrichtung zueinander zu halten.

5. Verfahren nach einem der vorhergehenden Ansprüche,
wobei der Befestigungsadapter des ersten Typs (4, Figur 4a) eine erste Adapter-Befestigungsschnittstelle (49a) aufweist;
wobei der Befestigungsadapter des zweiten Typs (4, Figur 4b) eine erste Adapter-Befestigungsschnittstelle (49a) aufweist;
wobei die erste Adapter-Befestigungsschnittstelle (49a) des ersten Typs und des zweiten Typs von Befestigungsadaptern (4, Figur 4a/b) dazu eingerichtet sind, beide zu den mehreren Typen von Fördermodulen (3, Figur 5a-c) zu passen.

## Revendications

1. Procédé de fabrication d'un robot mobile autonome (1),
le robot mobile autonome (1) comprenant
- un module convoyeur (2) comportant une voie de transport (21), la voie de transport (21) étant adaptée pour transporter un objet (9) entre différentes positions le long de ladite voie de transport (21) et/ou pour transférer ledit objet (9) depuis et/ou vers ledit robot mobile autonome (1),
- un module de déplacement (3) adapté pour changer de position dans une zone d'opération, notamment sans liaison mécanique par voie,
dans lequel
le robot mobile autonome (1) comprenant un adaptateur de fixation (4),
dans lequel l'adaptateur de fixation (4) est fixé au module de déplacement (3) et dans lequel le module convoyeur (2) est fixé à l'adaptateur de fixation (4),
le procédé comprend les étapes suivantes :
fourniture du module convoyeur (2) ;
fourniture du module de déplacement (3) ;
**caractérisé en ce que**
le module de déplacement (3) est sélectionné parmi une pluralité de types différents de modules de déplacement (3), comprenant au moins un premier type de module de déplacement (3, figure 4a) et un deuxième type de module de déplacement (3, figure 4a),
le procédé comprenant l'étape supplémentaire consistant à sélectionner un adaptateur de fixation (4) parmi une pluralité de types différents d'adaptateurs de fixation (4) sur la base du type de module de déplacement (3) sélectionné, dans lequel l'adaptateur (4) est adapté au module de déplacement (3) sélectionné,
dans lequel chaque adaptateur de fixation (4) parmi les différents types d'adaptateurs de fixation (4) comprend
- une première interface de fixation d'adaptateur (49a) adaptée à une interface de fixation de module de transport (29), et
- une deuxième interface de fixation d'adaptateur (49b) adaptée à une interface de fixation de module de déplacement (39) ;
dans lequel la pluralité d'adaptateurs de fixation (4) différents comprend :
- un adaptateur de fixation de premier type (4, figure 4a) comportant une deuxième interface de fixation d'adaptateur (49b) adaptée à une interface de fixation de module de déplacement (39) du module de déplacement de premier type (3, figure 4a),
- un adaptateur de fixation de deuxième type (4, figure 4b) comportant une deuxième interface de fixation d'adaptateur (49b) adaptée à une interface de fixation de module de déplacement (39) du module de déplacement de deuxième type (3, figure 4b) ;
dans lequel la deuxième interface de fixation d'adaptateur (49b) de l'adaptateur de fixation de premier type (4, figure 4a) ne correspond pas à l'interface de fixation de module de déplacement (39) du module de déplacement de deuxième type (3, figure 4b), et/ou
dans lequel la deuxième interface de fixation d'adaptateur (49b) de l'adaptateur de fixation de deuxième type (4, figure 4b) ne correspond pas à l'interface de fixation de module de déplacement (39) du module de déplacement de premier type (3, figure 4a).

2. Procédé selon la revendication précédente,
**caractérisé en ce que**
chaque module de déplacement (3) possède une interface de fixation de module de déplacement (39) et **en ce que**
le module de transport (2) possède une interface de fixation de module de transport (29),
dans lequel l"interface de fixation de module de transport (29) ne correspond pas à l'interface de fixation de module de déplacement (39).

3. Procédé selon une quelconque des revendications précédentes,
**caractérisé en ce que**
chaque adaptateur (4) comprend un cadre d'adaptateur (42) raccordant la première interface de fixation d'adaptateur (49a) à la deuxième interface de fixation d'adaptateur (49b).

4. Procédé selon la revendication précédente,
**caractérisé en ce que**
le cadre d'adaptateur (42) est adapté pour maintenir la première interface de fixation d'adaptateur (49a) et la deuxième interface de fixation d'adaptateur (49b) dans une orientation spatiale définie l'une par rapport à l'autre.

5. Procédé selon une quelconque des revendications précédentes,
dans lequel l'adaptateur de fixation de premier type (4, figure 4a) présente une première interface de fixation d'adaptateur (49a) ;
dans lequel l'adaptateur de fixation de deuxième type (4, figure 4b) présente une première interface de fixation d'adaptateur (49a) ;
la première interface de fixation d'adaptateur (49a) du premier type et l'adaptateur de fixation de deuxième type (4, figures 4a/b) étant adaptés pour s'adapter à la pluralité de types de modules convoyeurs (3, figures 5a-c).
